# EUROPÄISCHE PATENTANMELDUNG

(11) **EP 1 385 070 A2**
(43) Veröffentlichungstag der Anmeldung: **28.01.2004**
(21) Anmeldenummer: 03016460.2
(22) Anmeldetag: 22.07.2003
(51) Int. Cl.: G05B 19/414, G05B 19/05, G05B 19/418

(54) **Verfahren und Vorrichtung zum Steuern einer Anlage**

(30) Priorität: 24.07.2002 DE 10233553
(71) Anmelder: KUKA Roboter GmbH, 86165 Augsburg (DE)
(72) Erfinder: Groll, Franz, 88214 Ravensburg (DE); Bäumer, Jürgen, 88677 Markdorf (DE)
(74) Vertreter: Lempert, Jost, Dipl.-Phys. Dr. rer.nat.

(57) **Zusammenfassung**

Ein Verfahren zum Steuern einer Anlage, wie einer industriellen Produktionsanlage mit einer Anzahl von Arbeitseinheiten, wie Industrierobotern oder dergleichen, unter Verwendung wenigstens einer speicherprogrammierbaren Steuerung (SPS) zeichnet sich dadurch aus, dass historische Prozessdaten in einen Eingangsbereich der SPS eingespeist und durch eine Programmlogik der SPS verarbeitet werden. Eine zur Durchführung des erfindungsgemäßen Verfahren geeignete Vorrichtung weist einen Echtzeit-Informationsserver zum Erfassen, Archivieren bzw. Weiterleiten jeweils bestimmter historischer Prozessdaten der Anlage und einen Datenstrom-Controller zum flexiblen Wiedergeben archivierter Prozessdaten an wenigstens eine speicherprogrammierbare Steuerung SPS zum Steuern der Anlage auf, wobei die Ausgangsdaten der SPS wieder in diese einspeisbar sind.

## Beschreibung

Die Erfindung betrifft ein Verfahren zum Steuern einer Anlage, wie einer industriellen Produktionsanlage mit einer Anzahl von Arbeitseinheiten, wie Industrierobotern oder dergleichen, unter Verwendung wenigstens einer speicherprogrammierbaren Steuerung (SPS) sowie eine Vorrichtung zur Fehlersuche, Optimierung, Simulation und zum Informationsaustausch in elektronisch gesteuerten Anlagen, wie industriellen Produktionsanlagen mit einer Anzahl von Arbeiteinheiten.

Speicherprogrammierbare elektronische Steuerungen (SPS), bei denen Steuerungsprogramme als Folge von Anweisungen in einem Programmspeicher festgelegt werden, finden in der Automatisierungstechnik als Anlagen- und Leitstandsteuerungen regelmäßig Verwendung. Dabei kann eine SPS ein nur für Steuerungszwecke vorgesehenes Steuerungsgerät aufweisen, das durch Einlesen eines bestimmten Steuerungsprogramms in den Programmspeicher an bestimmte Steuerungsaufgaben angepasst werden kann. Alternativ lassen sich SPS auch mit einem Universalrechner, wie einem üblichen Personalcomputer, realisieren, auf dem das entsprechende Steuerungsprogramm läuft (Soft-SPS), was aufgrund des Wegfalls spezieller Hardwarekomponenten zu einer Kostenersparnis führt. Darüber hinaus sind bei Verwendung einer Soft-SPS flexiblere Programmlogiken programmierbar, so dass der Einsatz von Soft-SPS in vielen Bereichen der Automatisierungstechnik heutzutage einen Standard darstellt, mit dem sich auf kostengünstige und effiziente Weise eine flexible Steuerung auch komplexer Anlagen durchführen lässt, wozu auch die Möglichkeit zur Vorsehung einer komfortablen Bedienungsoberfläche gegenüber einer herkömmlichen SPS beiträgt.

Allerdings wirft der Einsatz flexibler speicherprogrammierbarer Steuerungen vor allem in komplexen und vielschichtigen Automatisierungsprozessen diverse technische Probleme auf, beispielsweise bei der Fehlersuche in der Anlage als auch im SPS-Programm selbst, bei der Optimierung von Fertigungsabläufen sowie im Rahmen nachträglicher, flexibler Fragestellungen (Kenndatengenerierung zu Prüf- oder Schulungszwecken), die bei bekannten SPS-gesteuerten Anlagen nicht bzw. nur unzureichend gelöst sind.

Der Erfindung liegt ausgehend von den vorstehend beschriebenen Problemen und Nachteilen beim bekannten Stand der Technik die Aufgabe zugrunde, ein Verfahren und eine Vorrichtung zur elektronischen Anlagensteuerung dahingehend weiterzuentwickeln, dass diese in flexibler Weise auch zur Prozessanalyse, Anlagensimulation, Fehlersuche und Optimierung, zu Schulungszwecken und zur vorbeugenden Anlagen-Instandhaltung einsetzbar sind.

Diese Aufgabe wird bei einem Verfahren der eingangs genannten Art dadurch gelöst, dass historische Prozessdaten in die SPS eingespeist und durch eine Programmlogik der SPS verarbeitet werden. Unter historischen Prozessdaten oder kurz Historie-Daten werden gespeicherten Daten verstanden, sei es eines tatsächlichen früheren Prozessdurchlaufs oder künstlich kreierte, die die SPS so liest und verarbeitet, als kämen diese direkt von der Anlagenperipherie, z.B. einem die verschiedenen Aktoren und Sensoren einer Anlage verbindenden Feldbus.

Seitens einer Vorrichtung der eingangs genannten Art ist zur Lösung der Aufgabe vorgesehen, dass diese einen Echtzeit-Informationsserver zum Erfassen, Archivieren bzw. Weiterleiten jeweils bestimmter historischer Prozessdaten der Anlage und einen Datenstrom-Controller zum flexiblen Weitergeben archivierter Prozessdaten an wenigstens eine speicherprogrammierbare Steuerung (SPS) zum Steuern der Anlage aufweist, deren Ausgangsdaten wieder in die SPS einspeisbar sind.

Die Soft-SPS verarbeitet die Daten, auch die historischen, entsprechend ihrer Programmlogik und ist aufgrund des erfindungsgemäß realisierten Rückbezugs im Nachhinein in der Lage, bestimmte Prozessabläufe zu Analyse-, Optimierungsoder Schulungszwecken nachzuvollziehen.

Nach einer Weiterentwicklung der Erfindung ist vorgesehen, dass die Prozessdaten vor der Einspeisung in die Soft-SPS in einer Echtzeit-Datenbank abgelegt und archiviert werden. Damit ist eine Verarbeitung von Prozessdaten sowohl im Online-Betrieb in Echtzeit als auch nachträglich im Offline-Betrieb möglich.

Nach einer bevorzugten Ausgestaltung des erfindungsgemäßen Verfahrens ist vorgesehen, dass im Zuge des Ablegens eine Datenkompression und/oder eine Zeitcodierung stattfindet.

Nach einer bevorzugten Weiterentwicklung des erfindungsgemäßen Verfahrens ist vorgesehen, dass die Einspeisung zyklusgenau hinsichtlich eines Bearbeitungszyklus der SPS erfolgt. Zyklusgenaue Einspeisung bedeutet, dass die Einspeisung von Historie-Daten in die SPS in zeitlicher Abstimmung mit dem Verarbeitungstakt der SPS erfolgt. Vorzugsweise erfolgt dabei eine zyklische und/oder mit der Einspeisung synchrone Verarbeitung der Prozessdaten durch die SPS. In diesem Zusammenhang kann weiterhin vorgesehen sein, dass der Prozessdaten-Strom zur SPS mittels eines Datenstrom-Controllers hinsichtlich Datenumfang, Datenrate, zeitlichem Umfang oder dergleichen gesteuert wird. Dabei ist der Datenstrom-Controller in bevorzugter Ausgestaltung zum zeitlich genauen Auffinden, zur zeitlichen Vorwärts- und Rückwärtswiedergabe, zum beschleunigten und verlangsamten sowie zum mengenmäßig flexiblen Wiedergeben von historischen Prozessdaten ausgebildet. Die vorstehend genannten Ausgestaltungen des erfindungsgemäßen Verfahren bzw. der erfindungsgemäßen Vorrichtung ermöglichen ein flexibles nachträgliches Abarbeiten von Prozessabläufen, beispielsweise mit unterschiedlicher Geschwindigkeit oder Detailliertheit zur Fehlersuche oder zu Schulungszwecken. Dabei ist der zeitliche Prozessablauf durch den Datenstrom-Controller beliebig skalier- und steuerbar.

In weiterer Ausgestaltung des erfindungsgemäßen Verfahrens ist vorgesehen, dass die Einspeisung der Prozessdaten online oder offline erfolgt. Da vorzugsweise Ergebnisse der Verarbeitung in einem Ausgangsbereich der SPS bereitgestellt werden, ergibt sich, dass die SPS durch kaskadierendes Verbinden ihres Eingangsbereichs mit ihrem Ausgangsbereich ggf. über weitere Datenstrom-Steuereinrichtungen quasi autark arbeiten kann, d.h. als virtuelle Maschine (VM) fungiert. Auf diese Weise ist die reale erfindungsgemäße SPS-Steuerung auch bei nichtinvasiver Anlagenbindung selbständig einsetzbar, was besonders im Optimierungs- und Schulungsbereich entscheidende (Kosten-)Vorteile mit sich bringt.

Nach einer Weiterentwicklung der Erfindung ist vorgesehen, dass die Prozessdaten an wenigstens einem Feldbus der Anlage generiert werden, wobei die historischen Prozessdaten nach der Reihenfolge ihrer Generierung in einem Schieberegister organisiert und jederzeit von einer Analyseeinheit lesbar und verarbeitbar sind. Dazu werden die historischen Prozessdaten vorzugsweise bei ihrer Generierung mit einer Zeitmarkierung versehen.

Die Analyseeinheit kann beispielsweise als Visualisierungseinheit zur optischen Prozessdatenanalyse ausgebildet sein, so dass jederzeit - online oder offline - eine Überwachung des Prozessablaufs möglich ist.

Unter einem Feldbus versteht man einen zur Prozesssteuerung und Prozessüberwachung eingesetzt serielles und digitales Übertragungssystem, das als Busstruktur ausgelegt ist. Die große Anzahl der in automatisierten Fertigung eingesetzten Elemente (Sensoren, Aktoren), die auch als Feld bezeichnet werden und in bestimmten Zeitintervallen abgefragt werden müssen, erfordert eine komplex ausgelegte Kommunikationsstruktur zwischen den Elementen und der zentralen Steuerung. Diese Struktur ist als Bus realisiert. Durch die Generierung der historischen Prozessdaten direkt an wenigstens einem Feldbus der Anlage lässt sich eine flexible dezentralisierte Generierung von Prozessdaten erreichen, wodurch nicht zuletzt Systemkapazitäten der zentralen Steuerung (Soft-SPS) geschont werden.

Nach einer Weiterbildung der Erfindung ist darüber hinaus vorgesehen, dass bestimmte vom Echtzeit-Informationsserver weitergeleitete Prozessdaten für andere Applikationen als Echtzeitdatenstrom oder in standardisierter Form als Objektverknüpfung und -einbettung (OLE) zur Prozesssteuerung bzw. -analyse verfügbar sind. Auf diese Weise ist zusätzlich zur erfindungsgemäßen Rückbezugs-Funktion auch das bloße Weiterleiten von Prozessdaten, beispielsweise zu Steuerungszwecken oder in Verbindung mit einem OPC-Client (OPC: OLE for Process Control) und einem Human-Machine-Interface (HMI) möglich.

Weiterhin weist die erfindungsgemäße Vorrichtung nach einer bevorzugten Ausgestaltung wenigstens eine Datenerfassungseinheit im Feldbussystem der Anlage auf. Die Datenerfassungseinheit ist vorzugsweise zum Zwischenspeichern der im Feldbus übertragenen Input/Output-Daten (I/O-Daten) ausgebildet und nach einer äußerst bevorzugten Ausgestaltung der Erfindung über ein lokales Netz (LAN) mit dem Echtzeit-Informationsserver verbunden.

Eine Datenerfassungseinheit erlaubt ein passives Mithören am Feldbussystem der Anlage. Sie "sieht" alle im Laufe eines Zyklus' des Feldbussystems übertragenen I/O-Daten der I/O-Module des Feldbusses (Feldbusmodule), speichert diese in einem Schieberegister zwischen und gibt die Information an einen Echtzeit-Informationsserver weiter. Eine derartige Architektur erlaubt die Kopplung mehrerer Datenerfassungseinheiten an ein und denselben Echtzeit-Informationsserver, woraus ein vereinfachter Netzaufbau resultiert. Die erfindungsgemäße LÁN-Verbindung zwischen Feldbus und der übergeordneten Steuerungssoftware, beispielsweise unter Verwendung des Ethernet-Protokolls, schafft einen standardisierten Übertragungsweg zwischen Steuerung und zu steuernder Anlage, was sich bei den Aufbau- und Wartungskosten sowie dem Wartungsaufwand günstig niederschlägt.

Nach einer äußerst bevorzugten Weiterentwicklung des erfindungsgemäßen Verfahren ist vorgesehen, dass historische Prozessdaten und aktuelle Prozessdaten zur Einspeisung in die SPS kombiniert werden. Auf diese Weise lassen sich Weiterentwicklungen im Rahmen der Erfindung flexibel mit bestehenden Vorteilen bekannter Anlagensteuerungen kombinieren, um so prozessabhängig ein optimales Steuerungskonzept realisieren zu können.

In bevorzugter Ausgestaltung kann vorgesehen sein, dass mindestens zwei speicherprogrammierbare Steuerungen durch kaskadierendes Verbinden ihrer Eingangsbereiche mit ihren Ausgangsbereichen ggf. über weitere Datenstrom-Steuereinrichtungen, eine virtuelle Maschine bilden

Weiterhin ist vorgesehen, dass wenigstens die SPS und/oder der Echtzeit-Informationsserver als Softwarekomponenten eines PC ausgebildet sind. Auf diese Weise ist eine kompakte zentrale Steuerungsvorrichtung geschaffen, die zudem kostengünstig auf Standardtechnologien aufsetzt.

Weitere Einzelheiten und Vorteile der Erfindung ergeben sich aus der nachfolgenden Beschreibung von Ausführungsbeispielen anhand der Zeichnungen. Es zeigt:
- Fig. 1: ein Blockschaltbild einer zu überwachenden Anlage und einer erfindungsgemäßen Steuerung;
- Fig. 2: eine modellhafte Beschreibung des Grundprinzips des erfindungsgemäßen Steuerungsverfahrens;
- Fig. 3: ein Blockschaltbild der erfindungsgemäßen Steuerungsvorrichtung;
- Fig. 4: ein Blockschaltbild eines erfindungsgemäßen Echtzeit-Informationsservers;
- Fig. 5: ein Blockschaltbild einer erfindungsgemäßen Datenerfassungseinheit;
- Fig. 6: ein Ablaufdiagramm der Verwendung zweier erfindungsgemäßer Steuerungsvorrichtungen zu Simulationszwecken;
- Fig. 7: ein Ablaufdiagramm des Einsatzes des erfindungsgemäßen Verfahrens bzw. der erfindungsgemäßen Steuerungsvorrichtung zu Optimierungszwecken;
- Fig. 8: ein Blockschaltbild einer Mischform der erfindungsgemäßen Steuerungsvorrichtung; und
- Fig. 9: ein Blockschaltbild einer erfindungsgemäß gesteuerten Anlage zur Verdeutlichung der Informationsverdichtung.

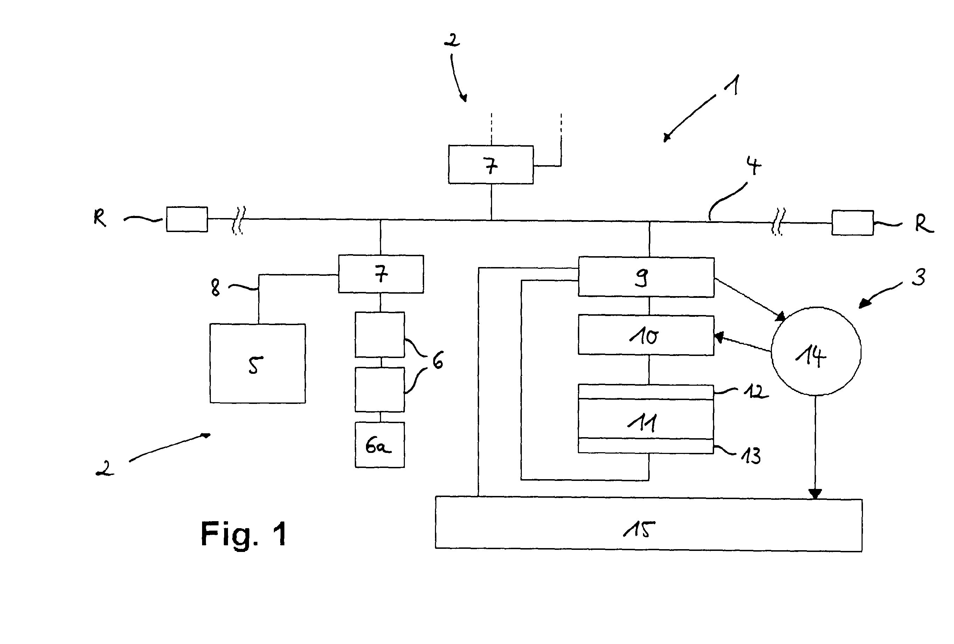

Fig. 1 zeigt in einem Blockschaltbild eine zu steuernde Anlage 1 mit einer Anzahl von Feldern 2 und einer Ansigensteuerung 3, die durch ein Bussystem 4 zum Daten- und Informationsaustausch miteinander verbunden sind.

Die Felder 2, von denen in Fig. 1 aus Gründen der Übersichtlichkeit nur eines explizit dargestellt ist, weisen zunächst für das Wesen der Anlage 1 charakteristische Arbeitseinheiten 5, wie insbesondere Handhabungssystemen in Form von Industrierobotern, aber auch Maschinen, angetriebene Geräte, wie Schweißzangen, u.a. auf. Daneben beinhaltet die Anlage 1 eine Anzahl von Feldbusmodulen 6, wenigstens eine Feldbus-Steuerung 6a sowie eine Datenerfassungseinheit 7, die ihrerseits untereinander durch ein Unterbussystem 8 (Feldbus) verbunden sind. Die Feldbusse 8 sind an das Bussystem 4 angeschlossen. Die Feldbussteuerung 6a ist vorzugsweise als speicherprogrammierbare Steuerung (SPS) ausgebildet.

Die Anlagensteuerung 3 setzt sich zusammen aus einem Echtzeit-Informationsserver 9, einem Datenstrom-Controller 10 sowie einer speicherprogrammierbaren Steuerung 11, wobei letztere Eingangs- und Ausgangsbereiche 12 bzw. 13 aufweist. Der Echtzeit-Informationsserver 9 und der Datenstrom-Controller 10 kommunizieren mit einer Echtzeit-Datenbank 14. Über den Echtzeit-Informationsserver 9 ist die Verbindung der Anlagensteuerung 3 an das Bussystem 4 sichergestellt. Der Datenstrom-Controller 10 ist dem Echtzeit-Informationsserver 9 nachgeschaltet. Letzterer ist mit dem Eingangsbereich 12 der speicherprogrammierbaren Steuerung 11 verbunden. Der Ausgangsbereich 13 der speicherprogrammierbaren Steuerung 11 ist wieder mit dem Echtzeit-Informationsserver 9 verbunden, so dass die Komponenten 9 - 13 der Anlagensteuerung 3 einen (geschlossenen) Regelkreis bilden.

Über die genannten Komponenten hinaus weist die Anlage 1 Peripheriegeräte 15 auf, z.B. Visualisierungsgeräte oder dergleichen, die direkt mit dem Echtzeit-Informationsserver 9 der Anlagensteuerung 3 in Verbindung stehen. Nach dem gezeigten Ausführungsbeispiel sind auch die Peripheriegeräte 15 in der Lage, auf die Echtzeit-Datenbank 14 zuzugreifen.

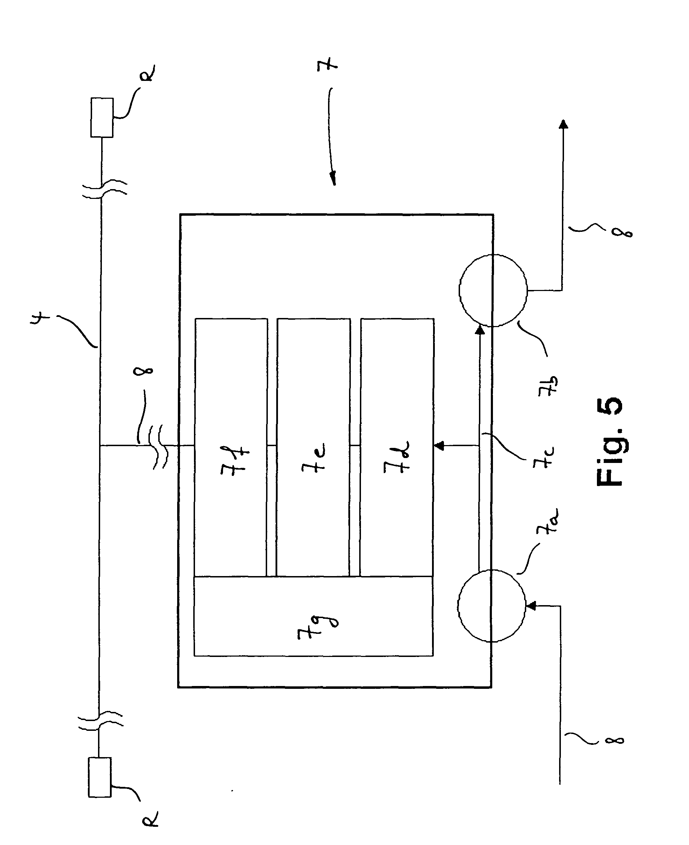

Die Betätigungseinheit 5, z.B. ein Industrieroboter, benutzt zur Steuerung seiner Peripherie (Aktoren, Sensoren; hier nicht im Detail gezeigt) den Feldbus 8, d.h. ein serielles und digitales Übertragungssystem in Bus-Struktur, aber das die große Anzahl der eingesetzten Peripherieelemente (Felder 2) in bestimmten Zeitintervallen durch die Feldbus-Steuerung 6a abgefragt werden. Zu diesem Zweck weist jedes Feld 2 der Anlage 1 die in Fig. 1 schematisch dargestellten I/O-Module (Feldbusmodule) 6 auf, durch die die Felddaten über den Feldbus 8 kommuniziert werden. Die Datenerfassungseinheit 7 erlaubt ein passives Mitlesen aller I/O-Daten der Feldbusmodule 6 und ist in Fig. 5 näher dargestellt.

Die Datenerfassungseinheit 7 gibt die Daten des Feldes 2 in einem an die Anforderungen der Anlagensteuerung 3 angepassten Datenstromformat über das Bussystem 4 an die Anlagensteuerung 3 weiter. Das Bussystem 4 ist als lokales Netz (LAN) ausgebildet und verwendet vorzugsweise ein Ethernet-Protokoll zur Datenübertragung. Die Datenübertragung von den Datenerfassungseinrichtungen 7 zur Anlagensteuerung 3 erfolgt in der Regel asynchron, d.h. sie ist nicht mit den Steuerungszyklen der Betätigungseinheiten 5 synchronisiert.

Bei den Feldbusmodulen 6 handelt es sich um handelsübliche digitale oder analoge Ein- und Ausgangsmodule, die an einen zentralen Feldbusmaster (PC-Einsteckkarte oder Embedded Hardware; nicht gezeigt) angeschlossen sind. Auf Seiten der Programmlogik wird der gesamte Feldbus 8 von der Feldbus-SPS 6a gesteuert. Vorzugsweise sind sowohl die Feldbus-SPS 6a als auch die SPS 11 der Anlagensteuerung 3 als softwarebasierte speicherprogrammierbare Steuerungen (Soft-SPS) ausgebildet und auf einem PC lauffähig.

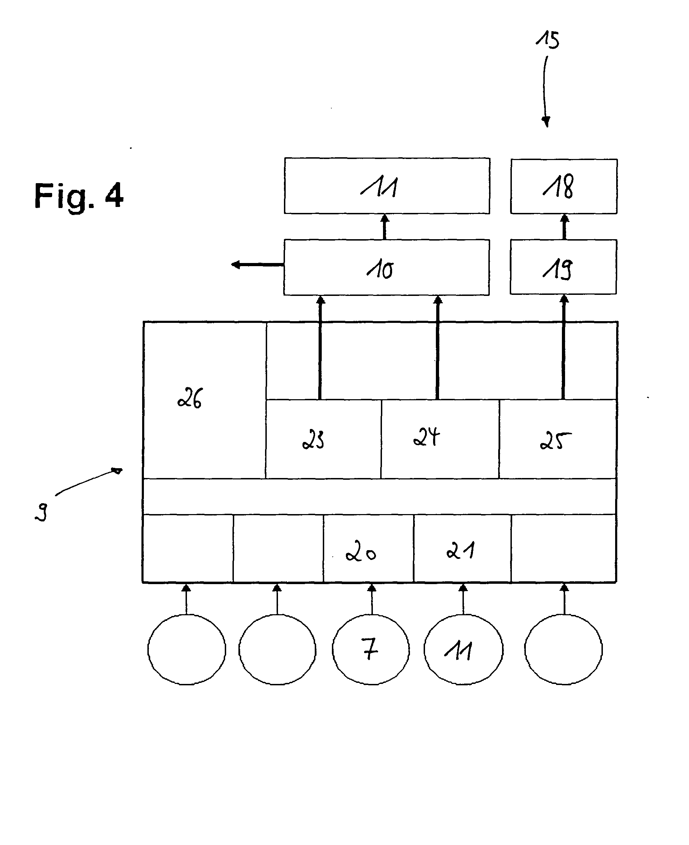

Am Echtzeit-Informationsserver 9 der Anlagensteuerung eintreffende Feldbus-Daten werden entweder nach entsprechender Aufbereitung als historische Prozessdaten (Historiedaten) in Form von RAD-Dateien (Realtime Archived Data) in der Echtzeit-Datenbank 14 archiviert oder direkt an den Datenstrom-Controller 10 weitergeleitet. Die Funktionsweise des Echtzeit-Informationsservers 9 ist weiter unten anhand von Fig. 4 näher erläutert.

Der Datenstrom-Controller 10 ist in erster Linie dazu vorgesehen, die SPS 11 mit Historiedaten aus der Echtzeit-Datenbank 14 zu versorgen. Ähnlich der Widergabefunktion eines Videorekorders liefert der Datenstrom-Controller 10 den Strom von Prozessdaten zum Eingangsbereich 12 der SPS 11 und erlaubt in diesem Zusammenhang ein genaues Positionieren innerhalb des Datenstroms, schnellen Vor- oder Rücklauf, Zeitlupen, Einzeldaten-Schritte oder dergleichen, wobei die Zeitmarkierungen der Historiedaten Verwendung finden. Die programmierte Logik der SPS 11 entscheidet anschließend über die Intention und das Ergebnis der Datenverarbeitung und stellt das Ergebnis im Ausgangsbereich 13 der SPS 11 erneut dem Echtzeit-Informationsserver 9 zur Verfügung, so dass für die Anlagensteuerung 3 erfindungsgemäß die Möglichkeit eines Rückbezugs auf sich selbst und damit die Ausbildung zu einer virtuellen Maschine (VM) gegeben ist.

Neben dem Datenstrom-Controller 10 können auch ggf. weitere Peripheriegeräte 15, wie Visualisierungs- oder Alarmierungsgeräte, auf die Historiedaten in der Echtzeit-Datenbank 14 zugreifen. Bestimmte Prozessdaten können jedoch wie in Fig. 1 dargestellt - vor einer Archivierung in der Echtzeit-Datenbank 14 durch den Echtzeit-Informationsserver 9 direkt an bestimmte Peripheriegeräte 15 weitergeleitet werden.

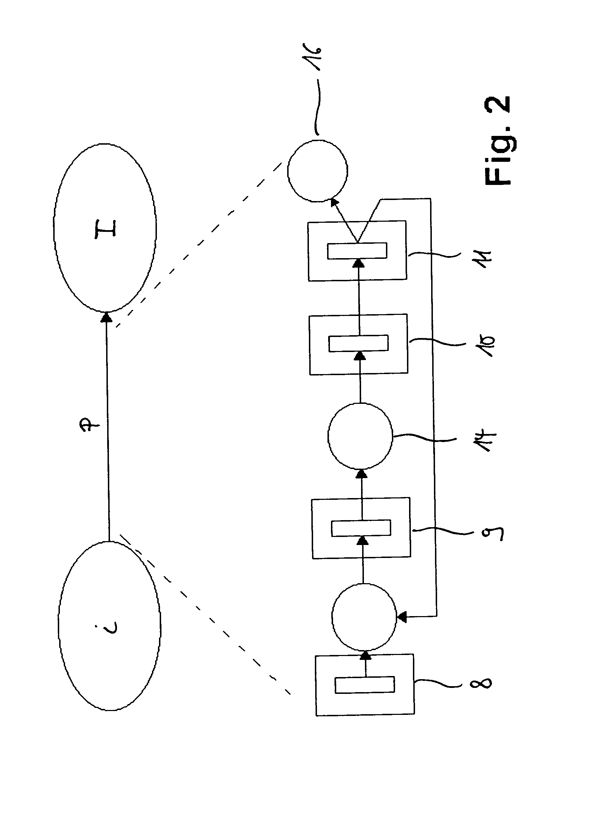

Fig. 2 illustriert schematisch das Grundprinzip des erfindungsgemäßen Steuerungsverfahren, das in einer Verdichtung relativ einfacher Information i in Form von realen Prozessdaten einer Anlage zu komplexer Information I, z.B. in Form verdichteter Anlagen-Kenndaten, besteht. Der Verfahrensablauf P ist im unteren Teil der Fig. 2 detailliert anhand eines Petri-Netzes dargestellt.

Reale Prozessdaten mit geringem Informationsgehalt i werden im Feldbus 8 generiert (vergleiche Fig. 1 und an den Echtzeit-Informationsserver 9 weitergeleitet, wo in der Regel eine Verarbeitung der Prozessdaten erfolgt (Zeitkodierung, Datenkompression usw.). Anschließend werden die Prozessdaten als Historiedaten in der Echtzeit-Datenbank 14 abgelegt. Der Datenstrom-Controller 10 liest Historiedaten aus der Echtzeit-Datenbank 14 und stellt diese je nach gewähltem Wiedergabemodus der speicherprogrammierbaren Steuerung 11 zur Verfügung. Die Ausgangsdaten der SPS 11 werden anschließend wieder in den Echtzeit-Informationsserver 9 eingespeist oder stehen als verdichtete Kenndaten 16 mit komplexem Informationsgehalt I zur Weiterverarbeitung zur Verfügung. Die in der Echtzeit-Datenbank 14 gespeicherten Daten und die Kenndaten 16 können sich grundsätzlich entsprechen, je nachdem, ob die SPS 11 im Rahmen ihrer Steuerungsfunktion die Daten lediglich interpretiert oder aktiv verändert.

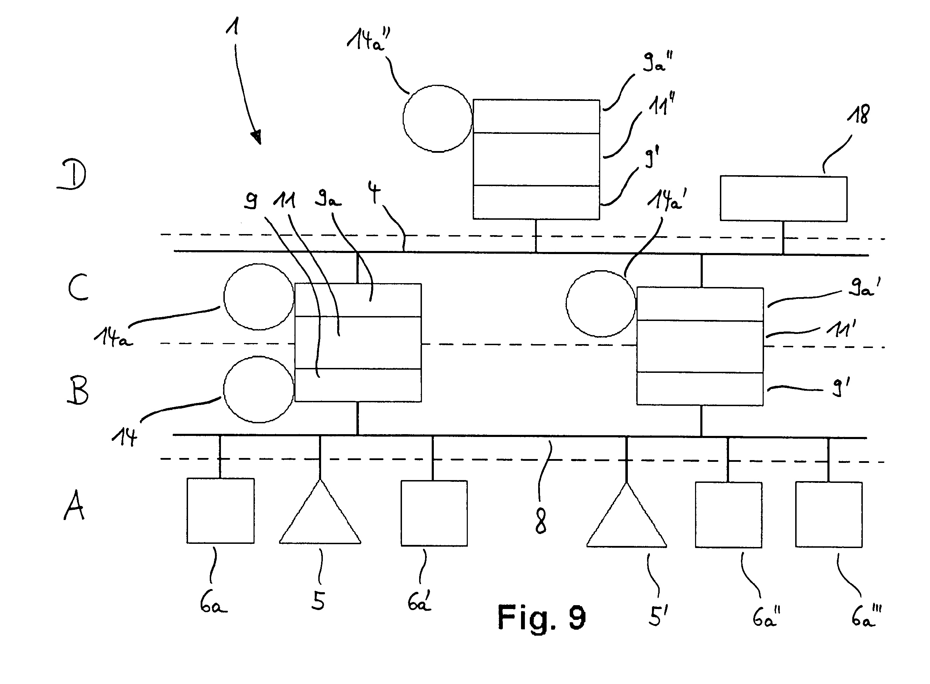

Im Rahmen einer stufenweise Informationsverdichtung ist es auch möglich, bereits verdichtete Kenndaten 16 in einer Datenbank 14 abzulegen. Die sich daraus ergebende Informationspyramide wird weiter unten mit Blick auf Fig. 9 erläutert.

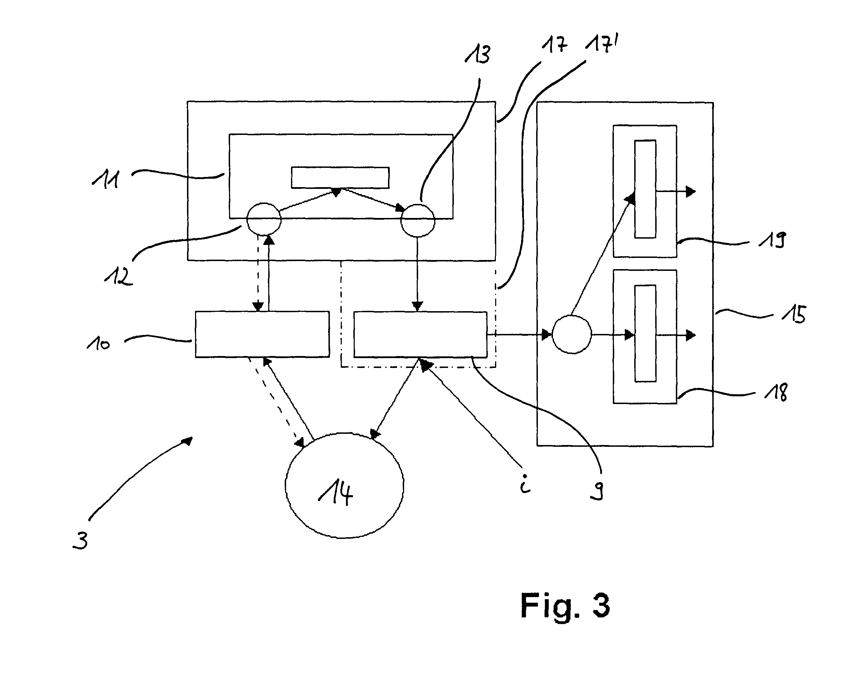

Fig. 3 zeigt schematisch den Aufbau und die Datenverarbeitung innerhalb der Anlagensteuerung 3 anhand eines kombinierten Blockschaltbild-Ablaufdiagramms.

Reale Prozessdaten aus den Feldbussen 8 der Anlage 1 gelangen als einfache Information i (vgl. Fig. 2) zum Echtzeit-Informationsserver 9 der Anlagensteuerung 3. Von dort aus werden die Daten direkt zur Peripherie 15 weitergeschleift oder in der Echtzeit-Datenbank 14 archiviert. Von dort liest sie der Datenstrom-Controller 10, der die nun als Historiedaten vorliegenden Prozessdaten in Abstimmung mit dem Steuerungszyklus der SPS 11 an deren Eingangsbereich 12 weiterleitet. Das dadurch definierte Beschreiben des Eingangsbereichs (der Eingangs-Map) der SPS 11 kann sowohl durch einen reinen Lese-Betrieb als auch von einer Echtzeitdatenbank mit aktivem Schreib-/Lesebetrieb erfolgen (angedeutet durch durchgezogene und gestrichelte Pfeile im linken Teil der Fig. 3).

Die SPS 11 verarbeitet die empfangenen Daten zu Steuerungszwecken und beschreibt ihrerseits den Ausgangsbereich 13 (Ausgangs-Map). Vom Ausgangsbereich der SPS 11 werden die Daten zurück zum Echtzeit-Informationsserver 9 geleitet, so dass eine Kaskadierung durch Verbinden eines Ausgangsbereichs 13 mit einem Eingangsbereich 12 erfolgt.

Beim gezeigten Ausführungsbeispiel der Fig. 3 ist die SPS 12 als reines Software-Modul, d.h. als softwarebasierte SPS (Soft-SPS) ausgebildet und auf einem PC 17 lauffähig. Es ist jedoch auch möglich, weitere Komponenten der Anlagensteuerung 3 auf einem gemeinsamen PC 17, 17' zu betreiben, was in Fig. 3 durch die strichpunktierte Linie angedeutet ist, so dass beispielsweise die SPS-Softwarekomponente und eine Echtzeit-Informationsserver-Softwarekomponente auf ein und demselben PC laufen.

Die erfindungsgemäße Steuerungsvorrichtung ist auch in der Lage, bestimmte Prozessdaten zur direkten Weiterverarbeitung an die Peripherie 15 weiterzuleiten. Beispielhafterweise zeigt Fig. 3 eine Mensch-Maschine-Schnittstelle (Human Machine Interface HMI) 18 sowie einen OPC-Server 19 (Object Linking and Embedding OLE for Process Control; Objektverknüpfung und -einbettung zur Prozesssteuerung).

Die Darstellung der Fig. 3 zeigt noch einmal anschaulich, wie durch das erfindungsgemäße Kaskadieren ein Regelkreis innerhalb der Anlagensteuerung 3 geschaffen ist, der durch seinen Rückbezug dafür sorgt, dass die erfindungsgemäße Steuerungsvorrichtung als virtuelle Maschine (VM) betreibbar und deshalb in besonders vorteilhafter Weise zu Optimierungs- oder Schulungszwecken oder dergleichen einsetzbar ist.

Fig. 4 zeigt den detaillierten Aufbau des Echtzeit-Informationsservers 9. Da der Echtzeit-Informationsserver 9 vorzugsweise als Softwarekomponente ausgebildet ist, sind auch die Unterkomponenten entsprechend als Software-Komponenten bzw. -module realisiert.

Der erfindungsgemäße Echtzeit-Informationsserver 9 weist eingangsseitig verschiedene Client-Programme auf, von denen exemplarisch ein RDS-Client 20 (Realtime Data Streamer; Echtzeit-Datenstreamer) und ein Leseprogramm für Ausgangsdaten (aus dem Ausgangsbereich 13 der SPS 11) 21 explizit bezeichnet sind.

Weiterhin umfasst der Echtzeit-Informationsserver 9 ein Übersetzer-Programm 22 (Interpreter) sowie ausgangsseitig ein Archivdatei-Schreibprogramm 23, einen RDS-Server 24 und einen OPC-Server 25. Zudem enthält der Echtzeit-Informationsserver 9 eine Daten-Beschreibungsdatei 26.

Die eingangsseitig von den externen Servern 7, 11 aufgenommenen Daten werden durch die internen Clients 20, 21 verarbeitet, ggf. durch den Interpreter 22 übersetzt und anschließend den ausgangsseitigen Server 23, 24, 25 zur Verfügung gestellt. Aufgabe des Interpreters 22 ist es, die aufgenommenen Daten in ein Format zu bringen, das zur Weiteverarbeitung durch den entsprechenden Client 23, 24, 25 geeignet ist. Das Archivdatei-Schreibprogramm 23 erzeugt Daten, die zur Archivierung in der Echtzeit-Datenbank 14 (hier nicht gezeigt) vorgesehen sind. Diese Historiedaten gelangen, wie in Fig. 1 bis 3 gezeigt, über die Datenbank 14 und den Datenstrom-Controller 10 zur SPS 11. Dagegen erzeugt der RDS-Server 24 einen kontinuierlichen Strom von Echtzeitdaten, die ohne vorherige Archivierung der SPS 11 direkt zur Verfügung gestellt werden, wobei - wie beim hier gezeigten Ausführungsbeispiel - der Datenstrom-Controller 10 als Zwischenstation zwischen Echtzeit-Informationsserver 9 und SPS 11 auch für den Echtzeit-Datenstrom dienen kann. Der OPC-Server 25 erzeugt Daten in Form von OPC-Variablen und stellt diese einem oder mehreren externen OPC-Clients 19, wie dem hier dargestellten HMI 18, beispielsweise zu Analysezwecken, zur Verfügung.

Generell erfasst also der Echtzeit-Informationsserver 9 mit Hilfe spezifischer Programme die Prozessdaten von verschiedenen Datenquellen, archiviert bestimmte Teile dieser Daten in einer Echtzeit-Datenbank 14, vorzugsweise mit Ringspeicherarchitektur (Schieberegister, FIFO-Buffer) und stellt diese Daten auf Anforderung verschiedenen Applikationen, unter anderem dem Datenstrom-Controller 10, wieder zur Verfügung.

Die Daten-Beschreibungsdatei 26 gibt in diesem Zusammenhang an, welche Daten mit welchen Programmen und mit welcher Abtastung erfasst, in der Echtzeit-Datenbank 14 archiviert bzw. direkt für andere Applikationen weitergeschleift werden; letzteres entweder als Echtzeit-Datenstrom 24 zum Datenstrom-Controller 10 oder OPC-Variable 25 zum OPC-Client 19.

Fig. 5 zeigt ein Blockschaltbild einer Ausführungsform der Datenerfassungseinheit 7 innerhalb des Feldbusses 8 (vergleiche Fig. 1) Die Datenerfassungseinheit 7 ist erfindungsgemäß zum passiven Mitlesen aller I/O-Daten von Modulen 6 innerhalb des Feldbusses 8 (Feldbusmodule) ausgebildet. Sie weist zu diesem Zweck neben einem Dateneingang 7a und einem Datenausgang 7b, die durch Optokoppler 7c intern miteinander verbunden sind, noch einen Interpreter 7d, ein Schieberegister 7e sowie einen RDS-Server 7f auf, über den die Einheit 7 mit dem Bussystem 4 der Anlage 1 mittels Ethernet-Verbindung verbunden ist. Weiterhin umfasst die Datenerfassungseinheit 7 eine Daten-Beschreibungsdatei 7g, deren Einträge für die Datenbehandlung durch die Software-Komponenten 7d und 7f maßgeblich sind.

Feldbus-Daten werden durch die erfindungsgemäße Datenerfassungseinheit 7 sowohl verarbeitet und in das Bussystem 4 der Anlage 1 eingespeist als auch direkt vom Dateneingang 7a zum Datenausgang 7b durchgeschleift, so dass sie innerhalb des Feldes 2 der Betätigungseinheit 5 bzw. der Feldbus-Steuerung 6a unverändert zur Verfügung stehen.

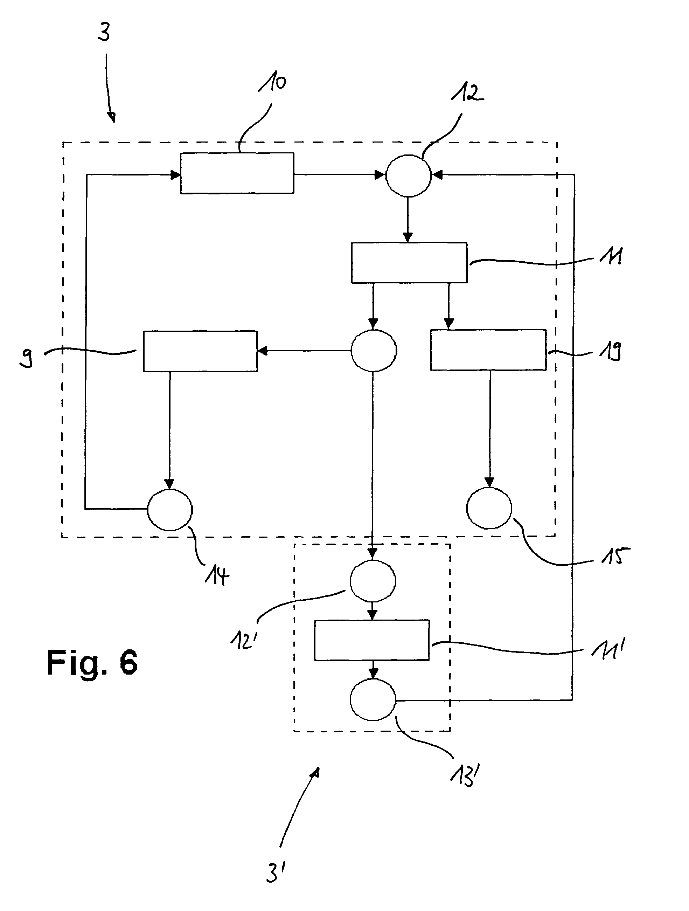

Fig. 6 zeigt den Verfahrensablauf bei Verwendung zweier erfindungsgemäßer Steuerungsvorrichtungen im Zuge einer Steuerungssimulation anhand einer Petri-Netz-Darstellung.

Zu Zwecken der Steuerungssimulation sind beim gezeigten Ausführungsbeispiel zwei erfindungsgemäße Anlagensteuerungen 3, 3', wie vorstehend beschrieben, hintereinandergeschaltet, wobei aus Gründen einer vereinfachenden Darstellung von der Steuerung 3' nur die SPS 11' mit ihren Eingangs- und Ausgangsbereichen 12' bzw. 13' gezeigt ist. Da bei Verwendung des erfindungsgemäßen Verfahrens das Steuerungsprogramm der SPS 11, 11' auch ohne direkte Anlagenbindung ablaufen kann, lassen sich die SPS 11, 11' auch als virtuelle Maschinen mit programmierbarer Logiksteuerung (Programmable Logic Control-Virtual Machine PLC-VM) bezeichnen.

Die in Fig. 6 gezeigte Ausgestaltung der Steuerung 3 entspricht im wesentlichen den Steuerungen 3, wie sie vorstehend anhand von Fig. 1 und 3 ausführlich beschrieben wurden. Allerdings ist im Zuge der Steuerungssimulation der Ausgangsbereich 13 der SPS/PLC-VM 11 nicht nur mit dem Echtzeit-Informationsserver 9, sondern zusätzlich mit dem Eingangsbereich 12' einer weiteren SPS/PLC-VM 11' verbunden. Deren Ausgangsbereich 13' wiederum steht in Verbindung mit dem Eingangsbereich 12 der ersten SPS/PLC-VM 11.

Um das Verhalten einer erfindungsgemäßen Anlagensteuerung beispielsweise zu Ausbildungszwecken ohne Anlagenbindung zu simulieren, ist die Steuerung 3' beim gezeigten Ausführungsbeispiel der Fig. 6 mit der Programmlogik ihrer SPS/PLC-VM 11' zum Generieren simulierter Aktor-/Sensor-Prozessdaten ausgebildet, die sie über ihre Ausgangs-Map 13' dem Eingangsbereich 12 der SPS/PLC-VM 11 ggf. in Verbindung mit über einen Datenstrom-Controller 10 eingespeisten Historiedaten zur Verfügung stellt. Da die erfindungsgemäßen Steuerungsvorrichtungen 3, 3' regelmäßig zum Lesen ihrer eigenen Ausgangsbereiche 13, 13' im Zuge der angestrebten Kaskadierung ausgebildet sind, sind sie für derartige Steuerungssimulationen ohne weiteres, d.h. ohne größere programmtechnische Änderungen einsetzbar. Darüber hinaus können die regelmäßig erzeugten und in der Datenbank 14 archivierten Historiedaten offline, also zeitlich unabhängig, auch zu Simulationszwecke herangezogen und verwendet werden.

Aufgrund der erwähnten Offline-Fähigkeit und der anhand von Fig. 6 erläuterten Steuerungssimulation eignet sich das erfindungsgemäße Verfahren bzw. die erfindungsgemäße Steuerungsvorrichtung in besonderer Weise zum Optimieren von SPS-Code.

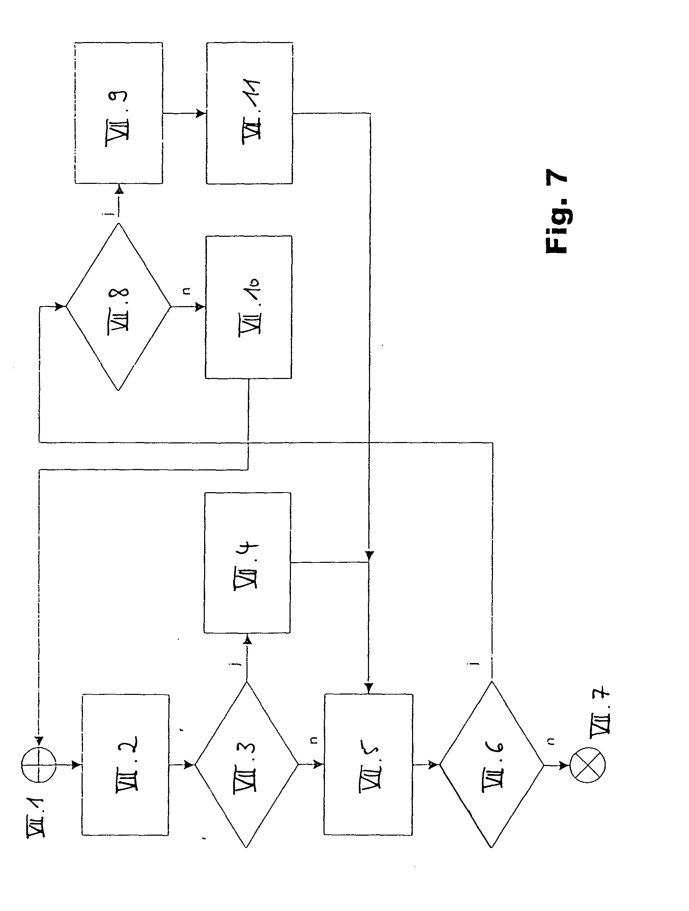

Fig. 7 zeigt ein Ablaufdiagramm eines Code-Optimierungszyklus' wie er durch das erfindungsgemäße Steuerungsverfahren bzw. die erfindungsgemäße Steuerungsvorrichtung möglich ist.

Der Zyklus beginnt bei VII.1, worauf bei VII.2 ein Aufzeichnen von Feldbusdaten (Sensor-, Aktordaten etc.) erfolgt. Anschließend erfolgt eine Abfrage VII.3, ob eine Optimierung mit Simulation (j) oder ohne Simulation (n) gewünscht ist. Ein Bejahen der Abfrage VII.3 führt zu einer Berechnung einer Referenzdatei VII.4, woraufhin bei VII.5 - wie auch für den Fall einer verneinten Abfrage VII.3 eine kritische Pfadanalyse (Critical Path Analysis CPA) durchgeführt wird mit dem Ziel, kritische Pfade innerhalb des zu optimierenden Prozesses zu finden, für die eine gegebene Prozessdauer Tᵢₛₜ größer als eine vorgegebene Maximaldauer Tₘₐₓ ist. Die CPA-Methode ist ein an sich bekanntes Verfahren zur zeitlichen Planung und Optimierung von komplexen Geschäfts-, Organisations- oder Arbeitsvorgängen, bei der durch Aufstellen bestimmter Pfeildiagramme der zeitintensivste und damit für die Gesamtdauer eines Prozesses maßgebliche Pfad als eine Abfolge von einzelnen Prozessschritten ermittelt wird. Auf diese Weise liefert eine CPA Indizien dafür, hinsichtlich welcher Verfahrensschritte sich durch verbesserte Organisation, z.B. verbesserte Steuerung, ein Zeitvorteil für den Gesamtprozess erzielen lässt.

Im Anschluss an die CPA VII.5 erfolgt bei VII.6 eine Abfrage, ob nach der CPA ein Optimierungspotential vorhanden ist (Tᵢₛₜ > Tₘₐₓ) oder nicht. Ein Verneinen dieser Abfrage beendet bei VII.7 den Optimierungszyklus.

Wird dagegen die Abfrage VII.6 bejaht, so ergeht bei VII.8 eine erneute Anfrage, ob eine Optimierung mit oder ohne Simulation durchgeführt werden soll. Ein Verneinen dieser Anfrage führt direkt zu einer Änderung der Programmlogik in der Anlage VII.9, woraufhin der Optimierungszyklus ausgehend von VII.1 erneut durchlaufen werden kann.

Wird dagegen bei VII.8 eine Optimierung mit Simulation gewünscht, so erfolgt eine Programmänderung nach Maßgabe der CPA nicht in der Anlage selbst sondern nur in deren Simulation (vergleiche Fig. 6). Anschließend wird bei VII.11 eine neue Referenzdatei für die Anlage berechnet. Der Zyklus wird dann bei VII.5 mit einer erneuten CPA fortgesetzt.

Die vorstehend erwähnte Referenzdatei VII.4 bzw. VII.11 parametrisiert den Zustand der zu simulierenden bzw. zu optimierenden Anlage und stellt somit das Bindeglied zwischen Realität und Simulation dar. Vorzugsweise ist eine real existierende Anlage durch ihre Referenzdatei bezüglich der Simulation eindeutig definiert; ebenso lässt sich aus einer simulierten Referenzdatei eindeutig auf die reale Anlage bzw. die sie steuernde Programmlogik schließen.

Die Erfindung ist nicht auf die bislang beispielhaft erläuterten Verfahrensabläufe bzw. Steuerungsvorrichtungen beschränkt. Insbesondere lassen sich im Rahmen der Erfindung auch verschiedenartige Mischformen des erfindungsgemäßen Steuerungsverfahrens mit anderen an sich bekannten SPS-Steuerungsverfahren realisieren.

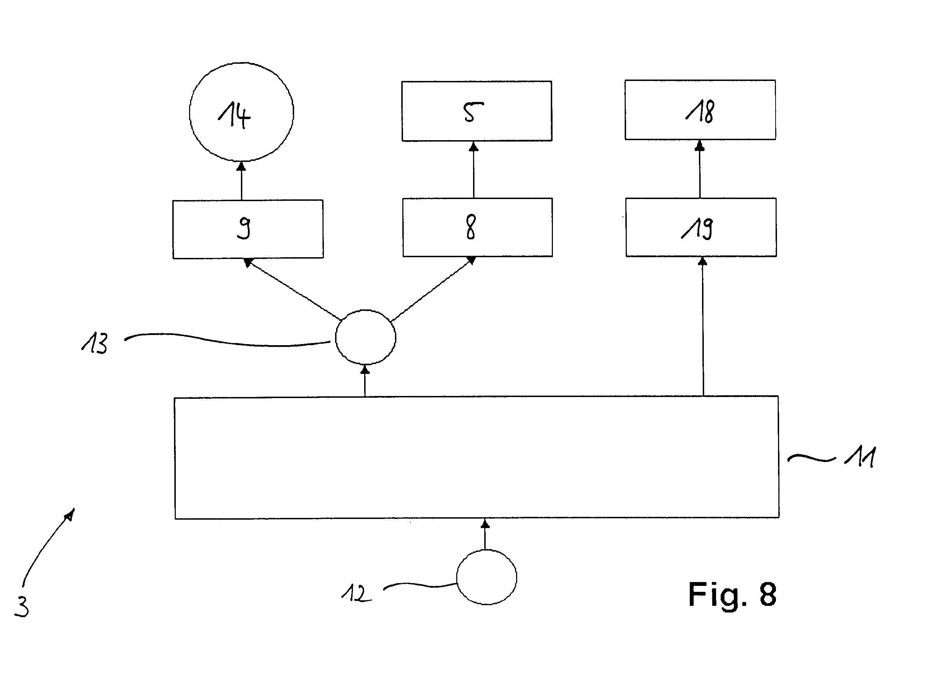

Fig. 8 zeigt schematisch eine solche Mischform.

Die gezeigte Anlagensteuerung 3 weist eine SPS/PLC-VM 11 mit Eingangs- und Ausgangsbereichen 12 bzw. 13 auf. Die Daten im Ausgangsbereich 13 werden erfindungsgemäß wiederum einem Echtzeit-Informationsserver 9 und einer Echtzeit-Datenbank 14 zur Verfügung gestellt. Zusätzlich können die Ausgangsdaten vom Ausgangsbereich 13 auch über einen Feldbus 8 zur aktiven Steuerung direkt an eine Betätigungseinheit 5 der Anlage, wie einen Roboter, bzw. an deren Aktoren oder Sensoren geleitet werden. Parallel übermittelt die SPS/PLC-VM 11 Daten auch direkt an einen OPC-Server 25, der beim gezeigten Ausführungsbeispiel mit einer HMI 18 zu Visualisierungszwecken in Verbindung steht.

Auf diese Weise lassen sich die bekannten Möglichkeiten der Anlagensteuerung mittels SPS mit den Vorteilen der Erfindung kombinieren.

Das erfindungsgemäße Archivieren von historischen Prozessdaten (Historiedaten) in Echtzeit-Datenbanken 14 ist nicht auf reale Prozessdaten beschränkt. Vielmehr kann eine Archivierung im Verlauf der angesprochenen Kaskadierung durch Rückbezug auch für verdichtete Kenndaten 16, d.h. komplexe Informationen I gemäß Fig. 2 durchgeführt werden. Die Archivierung in RAD-Dateien erfolgt für reale Prozessdaten wie auch für verdichtete Kenndaten 16 in gleicher Weise. Somit lässt sich eine Fehlersuche, Prozessoptimierung oder Mitarbeiterschulung auf praktisch jeder beliebigen Steuerungsebene durchführen.

Die Darstellung in Fig. 9 verdeutlicht die aus diesem Prinzip resultierende Informationspyramide.

Beim gezeigten Ausführungsbeispiel weist die Anlage 1 auf Steuerungsebene A eine Anzahl von Feldbus-SPS 6a - 6a"', und Betätigungseinrichtungen 5, 5' auf, beispielsweise Industrieroboter, die über ein Feldbussystem 8 untereinander und auf Anlagenebene B mit Echtzeit-Informationsservern 9, 9' verbunden sind. Die Echtzeit-Informationsserver 9, 9' bilden eine Einheit mit SPS/PLC-VM 11, 11' und weiteren Echtzeit-Informationsservern 9a, 9a', die auf Linienebene C angeordnet sind.

Die Informationsserver 9a, 9a' auf Linienebene C sind über ein Bussystem 4 mit einer weiteren SPS-PLC-VM 11'' und zugeordneten Echtzeitinformationsservern 9'' , 9a'' auf Bereichebene D verbunden. Auf Bereichsebene D ist auch eine Mensch-Maschine-Schnittstelle 18 (HMI) an den Bus 4 angeschlossen.

Einer Anzahl von Echtzeit-Informationsservern 9, 9a, 9a', 9a'' sind in erfindungsgemäßer Weise Echtzeit-Datenbanken 14, 14a, 14a', 14a'' zum Archivieren von Prozessdaten (Datenbank 14) bzw. mehr oder weniger verdichteter Kenndaten (Datenbanken 14a, 14', 14a'') zugeordnet. Dabei nimmt der Verdichtungsgrad der Daten mit der Anzahl der erfolgten Verarbeitungsschritte von der Steuerungsebene A über die Anlageebene B und die Linienebene C zur Bereichsebene D hin zu. Damit lassen sich durch eine Anzahl kaskadierender erfindungsgemäßer Steuerungsvorrichtungen in steigender Komplexität Prozessperipheriedaten, Prozesskenndaten, Anlagenkenndaten, Linienkenndaten und Bereichskenndaten erzeugen und archivieren.

Auf diese Weise lässt sich jedes gewünschte Maß an Transparenz durch Historiedaten mit angepasster Auflösung verwirklichen. Für alle mit Anlagensteuerung befassten Abteilungen und Bereiche eines Unternehmens, sei es bei der Einrichtung, der Instandhaltung oder der Mitarbeiterschulung, herrscht dabei ein einheitlicher Sprachgebrauch, und es finden gleiche Werkzeuge, Datenformate usw. Anwendung, so dass eine durchgängige Verbindung von Büro- und Steuerungswelt möglich ist. Dies führt zu einer erheblichen Kostenreduktion durch Homogenisierung und führt für die vorstehend beschriebene Erfindung zu einem hohen Return of Investment.

### Bezugszeichenliste

- 1: Anlage
- 2: Feld
- 3: Anlagesteuerung
- 4: Bus/Bussystem
- 5: Betätigungseinheit/Roboter
- 6: Feldbusmodule/IO-Module
- 6a, 6a', 6a": speicherprogrammierbare Steuerung für Feldbus (Feldbus-SPS)
- 7: Datenerfassungseinheit
- 7a: Dateneingang
- 7b: Datenausgang
- 7c: Optokoppler
- 7d: Interpreter
- 7e: Schieberegister
- 7f: RDS-Server
- 7g: Daten-Beschreibungsdatei
- 8: Feldbus
- 9, 9a, 9a', 9a'': Echtzeit-Informationsserver
(Realtime Information Server RIS)
- 10: Datenstrom-Controller (DSC)
- 11, 11', 11'': (softwarebasierte) speicherprogrammierbare Steuerung SPS
- 12, 12': Eingangsbereich (von 11, 11')
- 13, 13': Ausgangsbereich (von 11, 11')
- 14,14a,14a',14a'': Echtzeit-Datenbank
- 15: Peripherie(-Geräte)
- 16: Kenndaten
- 17, 17': PC
- 18: Human Machine Interface HMI
- 19: OPC-Client
- 20: Realtime Data Streamer RDS
- 21: Leseprogramm für Ausgangsdaten
- 22: Interpreter
- 23: Archivdatei-Schreibprogramm
- 24: RDS-Server
- 25: OPC-Server
- 26: Daten-Beschreibungsdatei
- A: Steuerungsebene
- B: Anlagenebene
- C: Linienebene
- D: Bereichsebene
- R: Abschlusswiderstand
- P: Steuerungsverfahren
- VII.1 - VII.11: Optimierungsschritte

## Patentansprüche

1. Verfahren zum Steuern einer Anlage, wie einer industriellen Produktionsanlage mit einer Anzahl von Arbeitseinheiten, wie Industrierobotern oder dergleichen, unter Verwendung wenigstens einer speicherprogrammierbaren Steuerung (SPS), **dadurch gekennzeichnet, dass** historische Prozessdaten in die der SPS eingespeist und durch eine Programmlogik der SPS verarbeitet werden.

2. Verfahren nach Anspruch 1, **dadurch gekennzeichnet, dass** die Einspeisung zyklusgenau hinsichtlich eines Bearbeitungszyklus der SPS erfolgt.

3. Verfahren nach einem der Ansprüche 1 oder 2, **dadurch gekennzeichnet, dass** die Prozessdaten vor der Einspeisung in die SPS in einer Echtzeit-Datenbank abgelegt werden.

4. Verfahren nach einem der Ansprüche 1 bis 3, **dadurch gekennzeichnet, dass** die Prozessdaten an wenigstens einem Feldbus (8) der Anlage (1) generiert werden.

5. Verfahren nach einem der Ansprüche 1 bis 4, **dadurch gekennzeichnet, dass** die Prozessdaten bei ihrer Generierung mit einer Zeitmarkierung versehen werden.

6. Verfahren nach einem der Ansprüche 1 bis 5, **dadurch gekennzeichnet, dass** eine zyklische und/oder mit der Einspeisung synchrone Verarbeitung der Prozessdaten durch die SPS erfolgt.

7. Verfahren nach Anspruch 6, **dadurch gekennzeichnet, dass** Ergebnisse der Verarbeitung in einem Ausgangsbereich der SPS bereitgestellt werden.

8. Verfahren nach Anspruch 6 oder 7, **dadurch gekennzeichnet, dass** die Ergebnisse der Verarbeitung in der Echtzeit-Datenbank abgelegt werden.

9. Verfahren nach Anspruch 8, **dadurch gekennzeichnet, dass** im Zuge des Ablegens eine Datenkompression und/oder eine Zeitcodierung stattfindet.

10. Verfahren nach einem der Ansprüche 1 bis 9, **dadurch gekennzeichnet, dass** der Prozessdaten-Strom zur SPS mittels eines Datenstrom-Controllers hinsichtlich Datenumfang, Datenrate, zeitlichem Umfang oder dergleichen gesteuert wird.

11. Verfahren nach einem der Ansprüche 1 bis 10, **dadurch gekennzeichnet, dass** die Einspeisung der Prozessdaten online oder offline erfolgt.

12. Verfahren nach einem der Ansprüche 1 bis 11, **dadurch gekennzeichnet, dass** das Verfahren je nach in der SPS implementierter Software zu einer Fehlersuche in der Anlage oder im SPS-Programm, zur Optimierung oder Simulation von Fertigungsabläufen oder zur synchronen bzw. nachträglichen Kenndatengenerierung eingesetzt wird.

13. Verfahren nach einem der Ansprüche 1 bis 12, **dadurch gekennzeichnet, dass** historische Prozessdaten und aktuelle Prozessdaten zur Einspeisung in die SPS kombiniert werden.

14. Verfahren nach einem der Ansprüche 1 bis 9, **dadurch gekennzeichnet, dass** mindestens zwei speicherprogrammierbare Steuerungen durch kaskadierendes Verbinden ihrer Eingangsbereiche mit ihren Ausgangsbereichen ggf. über weitere Datenstrom-Steuereinrichtungen, eine virtuelle Maschine bilden.

15. Vorrichtung zur Fehlersuche, Optimierung, Simulation und zum Informationsaustausch in elektronisch gesteuerten Anlagen (1), wie industriellen Produktionsanlagen mit einer Anzahl von Arbeitseinheiten, wie Industrierobotern (5) oder dergleichen, mit
einem Echtzeit-Informationsserver (9) zum Erfassen, Archivieren bzw. Weiterleiten jeweils bestimmter historischer Prozessdaten der Anlage (1) und
einem Daten-Controller (10) zum flexiblen Wiedergeben archivierter Prozessdaten an
wenigstens eine speicherprogrammierbare Steuerung (11) SPS zum Steuern der Anlage (1),
deren Ausgangsdaten wieder in die SPS (11) oder eine andere SPS einspeisbar sind.

16. Vorrichtung nach Anspruch 15, **dadurch gekennzeichnet, dass** die SPS (11) als softwarebasierte SPS (Soft-SPS) ausgebildet ist.

17. Vorrichtung nach einem der Ansprüche 15 oder 16, **gekennzeichnet durch** eine Echtzeit-Datenbank (14) zum Archivieren von Prozessdaten.

18. Vorrichtung nach einem der Ansprüche 15 bis 17, **dadurch gekennzeichnet, dass** der Datenstrom-Controller (10) zum zeitlich genauen Auffinden, zur zeitlichen Vorwärtsund Rückwärtswiedergabe, zum beschleunigten und verlangsamten sowie zum mengenmäßig flexiblen Wiedergeben von historischen Prozessdaten ausgebildet ist.

19. Vorrichtung nach einem der Ansprüche 15 bis 18, **dadurch gekennzeichnet, dass** ein Prozessablauf der Anlage (1) zeitlich unabhängig mit beliebiger Ablaufgeschwindigkeit, z.B. zur Fehlersuche, Ablaufoptimierung oder zu Trainingszwecken, nachvollziehbar ist.

20. Vorrichtung nach einem der Ansprüche 16 bis 19, **dadurch gekennzeichnet, dass** die historischen Prozessdaten nach der Reihenfolge ihrer Gewinnung in einem Schieberegister organisiert und jederzeit von einer Analyseeinheit (18, 19) lesbar und verarbeitbar sind.

21. Vorrichtung nach einem der Ansprüche 16 bis 20, **dadurch gekennzeichnet, dass** die historischen Prozessdaten mit einer Zeitmarkierung versehen sind.

22. Vorrichtung nach Anspruch 21, **gekennzeichnet durch** eine Visualisierungseinheit (18) zur Prozessdatenanalyse.

23. Vorrichtung nach einem der Ansprüche 17 bis 22, **dadurch gekennzeichnet, dass** bestimmte vom Echtzeit-Informationsserver (9) weitergeleitete Prozessdaten für andere Applikationen als Echtzeitdatenstrom oder als Objektverknüpfung und -einbettung (OLE) zur Prozesssteuerung bzw. -analyse verfügbar sind.

24. Vorrichtung nach einem der Ansprüche 19 bis 23, **dadurch gekennzeichnet, dass** die SPS (11) hinsichtlich ihres Programmverarbeitungszyklus' mit dem Wiedergabemodus des Datenstrom-Controllers (10) synchronisiert ist.

25. Vorrichtung nach einem der Ansprüche 17 bis 24, **gekennzeichnet durch** wenigstens eine Datenerfassungseinheit (7) im Feldbussystem (8) der Anlage (1).

26. Vorrichtung nach Anspruch 25, **dadurch gekennzeichnet, dass** die Datenerfassungseinheit (7) zum Zwischenspeichern der im Feldbus (8) übertragenen I/O-Daten ausgebildet ist.

27. Vorrichtung nach Anspruch 26, **dadurch gekennzeichnet, dass** der Zwischenspeicher ein Schieberegister (7e) ist.

28. Vorrichtung nach einem der Ansprüche 25 bis 27, **dadurch gekennzeichnet, dass** die Datenerfassungseinheit (7) über ein lokales Netz (LAN) mit dem Echtzeit-Informationsserver (9) verbunden ist.

29. Vorrichtung nach einem der Ansprüche 17 bis 28, **dadurch gekennzeichnet, dass** wenigstens die SPS (11) und/oder der Echtzeit-Informationsserver (9) als Softwarekomponenten eines PC (17, 17') ausgebildet sind.

30. Vorrichtung nach einem der Ansprüche 15 bis 29, **gekennzeichnet durch** eine virtuelle Maschine **durch** kaskodierende Verbindung von mindestens zwei programmierbaren Steuerungen über ihre Eingangs- und Ausgangsbereiche, gegebenenfalls über weitere Datenstrom-Steuerungseinrichtungen.
